# EUROPEAN PATENT APPLICATION

(11) **EP 2 891 889 A1**
(43) Date of publication of application: **08.07.2015**
(21) Application number: 13833055.0
(22) Date of filing: 21.08.2013
(51) Int. Cl.: G01Q 30/18, C01B 31/02, G01Q 60/24

(54) **DISCHARGE MEMBER FOR ANALYSIS**

(30) Priority: 31.08.2012 JP 2012191560
(71) Applicant: Nitto Denko Corporation, Ibaraki-shi, Osaka 567-8680 (JP)
(72) Inventor: MAENO, Youhei, Ibaraki-shi Osaka 567-8680 (JP)
(74) Representative: Müller-Boré & Partner Patentanwälte PartG mbB
(86) International application number: PCT/JP2013/072287
(87) International publication number: WO 2014/034489

(57) **Abstract**

Provided is the following static elimination member for analysis. In precision analysis such as analysis involving using an atomic force microscope, the static elimination member for analysis can be sufficiently attached to the periphery of a sample to be analyzed, and can suppress the charging of the periphery of the sample to be analyzed without contaminating the sample to be analyzed or its surrounding environment. Even when a metal is present around the sample to be analyzed, the member eliminates the possibility of a spark. The member enables the analysis of the sample while the sample is covered with a chamber. The member enables the analysis thereof under a high-temperature environment or a vacuum environment without problems. The static elimination member for analysis of the present invention includes a fibrous columnar structure including a plurality of fibrous columnar objects.

## Description

### Technical Field

The present invention relates to a static elimination member for analysis, and more specifically, to a static elimination member for analysis that can effectively eliminate static from a periphery of a sample to be analyzed in an analysis application involving using an atomic force microscope (AFM) or the like.

### Background Art

An atomic force microscope (AFM) is a microscope having a resolution at an atomic level, and can easily observe, for example, the fine shape of the surface of a sample (see, for example, Patent Literature 1). In addition, the atomic force microscope can observe not only a conductive material but also an insulating material such as a polymer compound. In those respects, the atomic force microscope is extremely effective as means for observing the surfaces of various samples.

The atomic force microscope observes the shape of the surface of a sample by: scanning the top of the surface with a probe having a tapered tip; and transforming an atomic force felt by the probe into an electric signal. The probe is attached to the tip of a cantilever, and the probe and the surface of the sample are brought into contact with each other by a minute force.

In precision analysis such as analysis involving using the atomic force microscope, an analysis environment needs to be strictly controlled in order that an accurate analysis result may be obtained.

The suppression of the charging of the periphery of a sample to be analyzed is available as one example of such analysis environment control. When the periphery of the sample to be analyzed is charged, an accurate analysis result is not obtained in, for example, analysis involving utilizing an electric signal. As means for suppressing the charging of the periphery of the sample to be analyzed, there has heretofore been adopted a method involving attaching a conductive tape or a conductive paste to the periphery of the sample to be analyzed, a method involving static elimination the periphery of the sample to be analyzed with a static blower, a method involving performing measurement under a high-humidity environment where charging hardly occurs, or the like (see, for example, Patent Literatures 2 and 3).

However, in the method involving attaching the conductive tape or the conductive paste to the periphery of the sample to be analyzed, a contaminant such as an organic component in the tape or the paste may adhere to the sample to be analyzed and hence an accurate analysis result may not be obtained. In addition, in the method involving attaching the conductive tape or the conductive paste to the periphery of the sample to be analyzed, the problem of the contamination of a surrounding environment due to the volatilization of an organic solvent in the tape or the paste may arise under a high-temperature environment or a vacuum environment.

In addition, in the method involving static elimination the periphery of the sample to be analyzed with the static blower, dirt or dust may rise to adhere to the sample to be analyzed and hence an accurate analysis result may not be obtained. In addition, in the method involving static elimination the periphery of the sample to be analyzed with the static blower, when a metal is present around the sample to be analyzed, a spark may occur. Further, in order that measurement under a high-temperature environment or a vacuum environment may be performed, an analysis environment needs to be retained by covering the sample with a chamber. In this case, it becomes physically difficult to adopt the static blower.

In addition, in the method involving performing measurement under a high-humidity environment where charging hardly occurs, a water component adheres to the sample to be analyzed and hence an accurate analysis result is not obtained in some cases. In addition, under a high-temperature environment or a vacuum environment, the following problem arises. Even when an attempt is made to realize the high-humidity environment, the water component evaporates and hence the high-humidity environment cannot be maintained.

Further, when a static elimination member is used for suppressing the charging of the periphery of the sample to be analyzed, it is desired that the member be sufficiently attached to the periphery of the sample to be analyzed. This is because when the static elimination member is not sufficiently attached to the periphery of the sample to be analyzed, the static elimination member may be misaligned by, for example, the shape and tilt of the place where the member is attached.

### Citation List

### Patent Literature

[PTL 1] JP 2011-252849 A
[PTL 2] JP 2000-129235 A
[PTL 3] JP 2002-257702 A

### Summary of Invention

### Technical Problem

An object of the present invention is to provide the following static elimination member for analysis. In precision analysis such as analysis involving using an atomic force microscope, the static elimination member for analysis can be sufficiently attached to the periphery of a sample to be analyzed, and can suppress the charging of the periphery of the sample to be analyzed without contaminating the sample to be analyzed or its surrounding environment. Even when a metal is present around the sample to be analyzed, the member eliminates the possibility of a spark. The member enables the analysis of the sample while the sample is covered with a chamber. The member enables the analysis thereof under a high-temperature environment or a vacuum environment without problems.

### Solution to Problem

A static elimination member for analysis of the present invention includes a fibrous columnar structure including a plurality of fibrous columnar objects.

In a preferred embodiment, the static elimination member for analysis of the present invention has a shearing adhesive strength for a glass surface at room temperature of 1 N/cm² or more.

In a preferred embodiment, the fibrous columnar structure includes a carbon nanotube aggregate including a plurality of carbon nanotubes.

In a preferred embodiment, the static elimination member for analysis of the present invention has a sheet shape.

In a preferred embodiment, the static elimination member for analysis of the present invention has a probe shape.

### Advantageous Effects of Invention

According to one embodiment of the present invention, the following static elimination member for analysis can be provided. In precision analysis such as analysis involving using an atomic force microscope, the static elimination member for analysis can be sufficiently attached to the periphery of a sample to be analyzed, and can suppress the charging of the periphery of the sample to be analyzed without contaminating the sample to be analyzed or its surrounding environment. Even when a metal is present around the sample to be analyzed, the member eliminates the possibility of a spark. The member enables the analysis of the sample while the sample is covered with a chamber. The member enables the analysis thereof under a high-temperature environment or a vacuum environment without problems.

### Brief Description of Drawings

FIG. **1** is a schematic sectional view of an example of a preferred embodiment of a fibrous columnar structure in a static elimination member for analysis of the present invention.
FIG. **2** is a schematic sectional view of an example of the static elimination member for analysis of the present invention in a preferred embodiment of the present invention when the static elimination member for analysis has a sheet shape.
FIG. **3** is a schematic sectional view of an example of the static elimination member for analysis of the present invention in a preferred embodiment of the present invention when the static elimination member for analysis has a probe shape.
FIG. **4** is a schematic sectional view of an example of a static elimination member for analysis in a preferred embodiment of the present invention including a base material.
FIG. **5** is a schematic sectional view of an apparatus for producing a carbon nanotube aggregate when a static elimination member for analysis in a preferred embodiment of the present invention includes the carbon nanotube aggregate.

### Description of Embodiments

### «Static elimination member for analysis»

A static elimination member for analysis of the present invention includes a fibrous columnar structure including a plurality of fibrous columnar objects. The static elimination member for analysis of the present invention may be a member formed only of the fibrous columnar structure including the plurality of fibrous columnar objects, or may be a composite of the fibrous columnar structure including the plurality of fibrous columnar objects and any appropriate other material to the extent that the effects of the present invention are not impaired. The static elimination member for analysis of the present invention includes the fibrous columnar structure including the plurality of fibrous columnar objects, and hence in precision analysis such as analysis involving using an atomic force microscope, the member can be sufficiently attached to the periphery of a sample to be analyzed, and can suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; enables the analysis of the sample while the sample is covered with a chamber; and enables the analysis thereof under a high-temperature environment or a vacuum environment without problems.

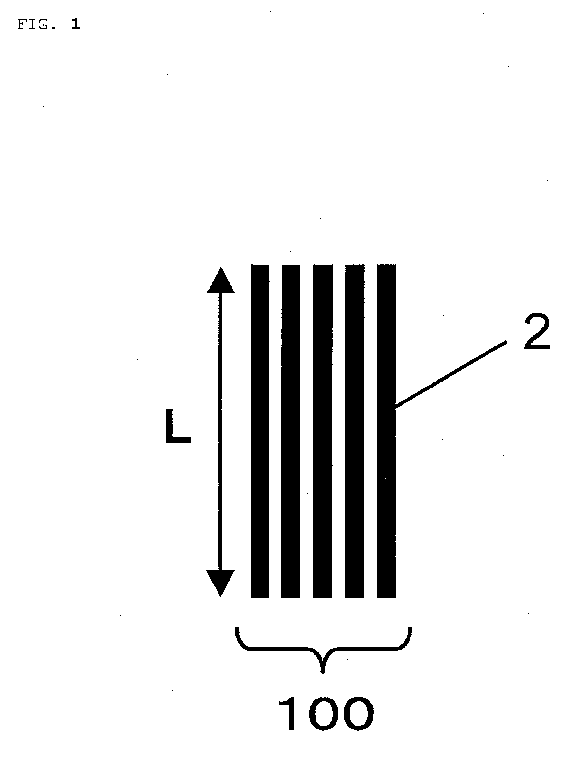

The fibrous columnar structure including the plurality of fibrous columnar objects is an aggregate including the plurality of fibrous columnar objects. Such fibrous columnar structure is preferably an aggregate including a plurality of fibrous columnar objects each having a length **L.** FIG. **1** illustrates a schematic sectional view of an example of a preferred embodiment of the fibrous columnar structure in the static elimination member for analysis of the present invention. In FIG. **1****,** a fibrous columnar structure **100** includes a plurality of fibrous columnar objects **2** each having the length **L.** In this case, the plurality of fibrous columnar obj ects **2** can be present as an aggregate by virtue of, for example, a van der Waals force acting between the objects.

The size and shape of the static elimination member for analysis of the present invention can be appropriately selected depending on the kind of an analytical instrument. Examples of the shape which the static elimination member for analysis of the present invention can adopt include a sheet shape and a probe shape. The static elimination member for analysis of the present invention can adopt any appropriate size depending on a site where the member is used.

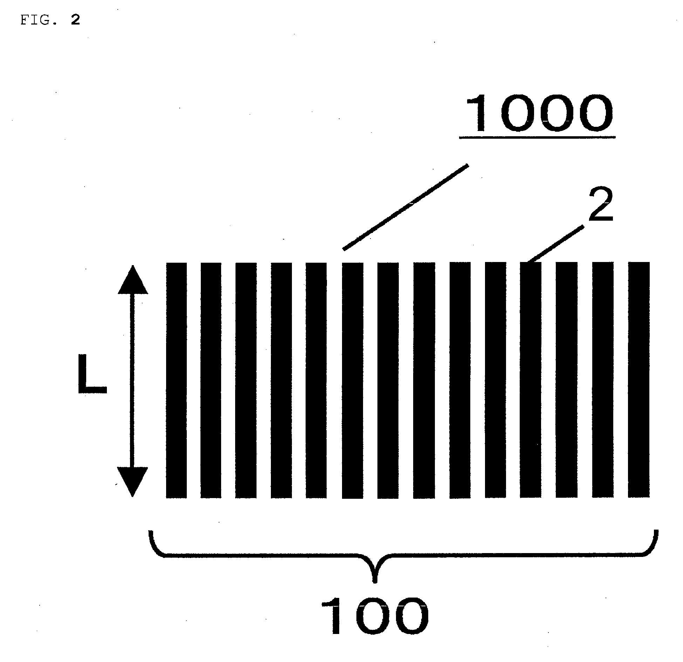

FIG. **2** illustrates a schematic sectional view of an example of the static eliminationmember for analysis of the present invention in a preferred embodiment of the present invention when the static elimination member for analysis has a sheet shape. In FIG. **2****,** a static elimination member **1000** for analysis of the present invention includes the fibrous columnar structure **100** including the plurality of fibrous columnar objects **2** each having the length **L.** In FIG. **2****,** the thickness direction of the static elimination member for analysis having a sheet shape corresponds to the direction of the length **L** of each of the fibrous columnar objects **2.** When the static elimination member for analysis of the present invention has a sheet shape, the static elimination member for analysis of the present invention is preferably used in the following form: the sheet surface side of the member is attached to the periphery of the sample to be analyzed.

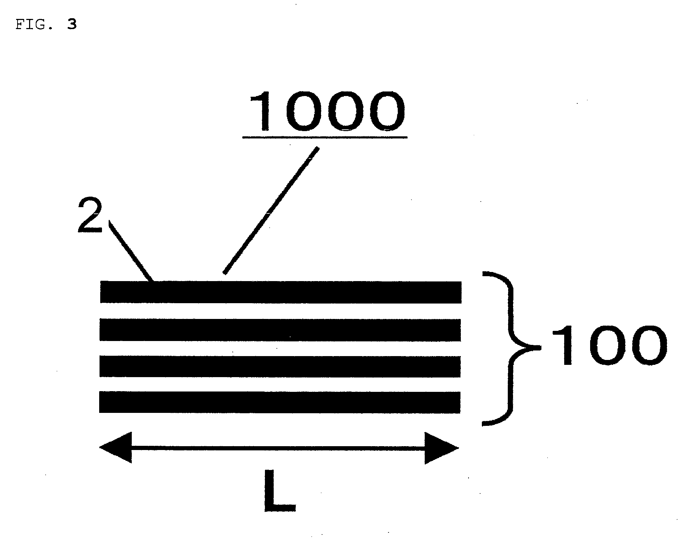

FIG. **3** illustrates a schematic sectional view of an example of the static eliminationmember for analysis of the present invention in a preferred embodiment of the present invention when the static elimination member for analysis has a probe shape. In FIG. **3****,** the static elimination member **1000** for analysis of the present invention includes the fibrous columnar structure **100** including the plurality of fibrous columnar objects **2** each having the length **L.** In FIG. **3****,** the length direction (in FIG. **3****,** horizontal direction) of the static elimination member for analysis having a probe shape corresponds to the direction of the length **L** of each of the fibrous columnar objects **2.** When the static elimination member for analysis of the present invention has a probe shape, the static elimination member for analysis of the present invention is preferably used in the following form: the length direction side of the member is attached to the periphery of the sample to be analyzed.

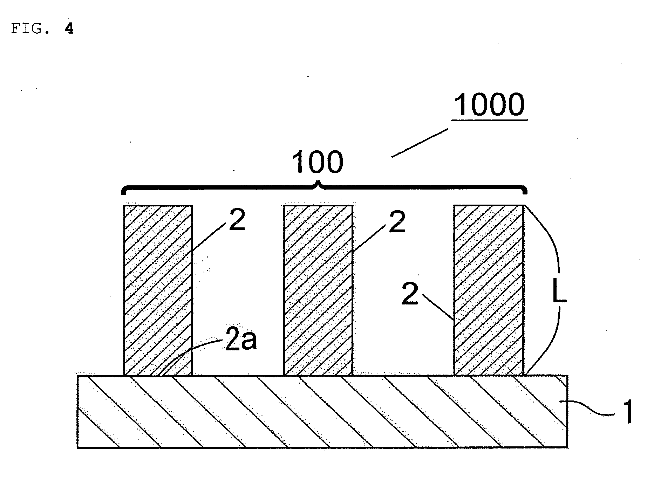

The static elimination member for analysis of the present invention may include any appropriate base material. FIG. **4** illustrates a schematic sectional view of an example of a static elimination member for analysis in a preferred embodiment of the present invention including such base material. In FIG. **4****,** the static elimination member for analysis of the present invention has a sheet shape. In FIG. **4****,** the static elimination member **1000** for analysis of the present invention includes the fibrous columnar structure **100** including the plurality of fibrous columnar objects **2** each having the length **L** and a base material **1.** One end **2a** of each of the fibrous columnar objects **2** is fixed to the base material **1.** The fibrous columnar objects **2** are each aligned in the direction of the length **L.** The fibrous columnar objects **2** are each preferably aligned in a direction substantially perpendicular to the base material **1.** The term "direction substantially perpendicular" as used herein means that the angle of the object with respect to the surface of the base material **1** is preferably 90°±20°, more preferably 90°±15°, still more preferably 90°±10°, particularly preferably 90°±5°.

The length **L** of each fibrous columnar object is preferably 10 µm or more, more preferably from 10 µm to 2,000 µm, still more preferably from 15 µm to 1,500 µm, particularly preferably from 20 µm to 1,000 µm, most preferably from 25 µm to 500 µm. Adjusting the length **L** of each fibrous columnar obj ect within the range enables the static elimination member for analysis of the present invention to: be additionally sufficiently attached to the periphery of a sample to be analyzed in precision analysis such as analysis involving using an atomic force microscope; and additionally suppress the charging of the periphery of the sample to be analyzed.

The static elimination member for analysis of the present invention has a shearing adhesive strength for a glass surface at room temperature of preferably 1 N/cm² or more, more preferably from 1 N/cm² to 200 N/cm², still more preferably from 5 N/cm² to 200 N/cm², particularly preferably from 10 N/cm² to 200 N/cm². Adjusting the shearing adhesive strength for a glass surface at room temperature within the range enables the static elimination member for analysis of the present invention to be additionally sufficiently attached to the periphery of a sample to be analyzed in precision analysis such as analysis involving using an atomic force microscope. When the shearing adhesive strength for a glass surface at room temperature is excessively small, the static elimination member for analysis of the present invention may be misaligned by, for example, the shape and tilt of the place where the member is attached. When the shearing adhesive strength for a glass surface at room temperature is excessively large, it may become difficult to peel the member after its use.

It should be noted that the shearing adhesive strength of the static elimination member for analysis of the present invention is defined as follows: the static elimination member for analysis is left at rest in a site where the static elimination member for analysis is attached, and in this case, the static elimination member for analysis is placed so that a contact surface between the static elimination member for analysis and the attachment site may be largest, and a shearing adhesive strength on a side closer to the contact surface at the time of the placement is regarded as the foregoing shearing adhesive strength. When the static elimination member for analysis of the present invention has a sheet shape, the shearing adhesive strength of the static elimination member for analysis of the present invention refers to a shearing adhesive strength on the sheet surface side of the static eliminationmember for analysis of the present invention. When the static elimination member for analysis of the present invention has a probe shape, the shearing adhesive strength of the static elimination member for analysis of the present invention refers to a shearing adhesive strength on the length direction side of the static elimination member for analysis of the present invention.

Any appropriate material may be adopted as a material for the fibrous columnar object. Examples thereof include: metals such as aluminum and iron; inorganic materials such as silicon; carbon materials such as a carbon nanofiber and a carbon nanotube; and high-modulus resins such as an engineering plastic and a super engineering plastic. Specific examples of the resin include polystyrene, polyethylene, polypropylene, polyethylene terephthalate, acetyl cellulose, polycarbonate, polyimide, and polyamide. Any appropriate physical property may be adopted as each physical property of the resin such as the molecular weight thereof as long as the object of the present invention can be attained.

Any appropriate base material may be adopted as the base material that may be included in the static elimination member for analysis of the present invention depending on purposes. Examples thereof include quartz glass, silicon (such as a silicon wafer), an engineering plastic, and a super engineering plastic. Specific examples of the engineering plastic and the super engineering plastic include polyimide, polyethylene, polyethylene terephthalate, acetyl cellulose, polycarbonate, polypropylene, and polyamide. Any appropriate physical property may be adopted as each physical property of the base material such as the molecular weight thereof as long as the object of the present invention can be attained.

The thickness of the base material that may be included in the static elimination member for analysis of the present invention may be set to any appropriate value depending on purposes.

The surface of the base material that may be included in the static elimination member for analysis of the present invention may be subjected to conventional surface treatment, e.g., chemical or physical treatment such as chromic acid treatment, exposure to ozone, exposure to a flame, exposure to a high-voltage electric shock, or ionizing radiation treatment, or coating treatment with an under coat (such as the above-mentioned adherent material) in order that adhesiveness with an adjacent layer, retentivity, or the like may be improved.

The base material that may be included in the static elimination member for analysis of the present invention may be a single layer, or may be a multilayer body.

The diameter of each fibrous columnar object is preferably from 0.3 nm to 2,000 nm, more preferably from 1 nm to 1,000 nm, still more preferably from 2 nm to 500 nm. Adjusting the diameter of each fibrous columnar object within the range enables the static elimination member for analysis of the present invention to: be additionally sufficiently attached to the periphery of a sample to be analyzed in precision analysis such as analysis involving using an atomic force microscope; and additionally suppress the charging of the periphery of the sample to be analyzed.

The fibrous columnar structure in the static eliminationmember for analysis of the present invention is preferably a carbon nanotube aggregate including a plurality of carbon nanotubes. In this case, the fibrous columnar objects are each preferably a carbon nanotube.

The static elimination member for analysis of the present invention may be formed of only the carbon nanotube aggregate including the plurality of carbon nanotubes, or may be formed of the carbon nanotube aggregate including the plurality of carbon nanotubes and any appropriate member.

When the static elimination member for analysis of the present invention includes the carbon nanotube aggregate including the plurality of carbon nanotubes and also includes the base material, one end of each of the carbon nanotubes may be fixed to the base material. In this description, the same examples as those described above are given.

When the static elimination member for analysis of the present invention includes the carbon nanotube aggregate including the plurality of carbon nanotubes and also includes the base material, any appropriate method may be adopted as a method of fixing the carbon nanotubes to the base material. For example, a substrate used in the production of the carbon nanotube aggregate may be directly used as a base material. Further, a base material having formed thereon an adhesion layer may be fixed to the carbon nanotubes. Further, when the base material is a thermosetting resin, the fixing may be performed by producing a thin film in a state before a reaction, and crimping one end of each of the carbon nanotubes to the thin film layer, followed by curing treatment. In addition, when the base material is a thermoplastic resin, a metal, or the like, the fixing may be performed by crimping one end of the fibrous columnar structure to the base material in a molten state, followed by cooling to room temperature.

### «Carbon nanotube aggregate»

When the static elimination member for analysis of the present invention includes a fibrous columnar structure, the fibrous columnar structure is preferably a carbon nanotube aggregate.

When the static elimination member for analysis of the present invention includes the carbon nanotube aggregate, the static elimination member for analysis of the present invention can be additionally sufficiently attached to the periphery of a sample to be analyzed in precision analysis such as analysis involving using an atomic force microscope without the use of any pressure-sensitive adhesive or adhesive containing a contaminant such as an organic component. That is, the static elimination member for analysis of the present invention can express the following effect in addition to a preventing effect on the contamination of the sample to be analyzed or its surrounding environment: the member can be sufficiently attached to the periphery of the sample to be analyzed irrespective of the shape and tilt of the place where the member is attached.

When the static elimination member for analysis of the present invention includes the carbon nanotube aggregate, the static elimination member for analysis of the present invention can additionally suppress the charging of the periphery of a sample to be analyzed in precision analysis such as analysis involving using an atomic force microscope without the use of any conductive tape or conductive paste, and without the use of any static blower. That is, the static elimination member for analysis of the present invention can express the following effect: the charging of the periphery of the sample to be analyzed can be additionally suppressed without the adhesion of a contaminant such as an organic component to the sample to be analyzed, without the problem of the contamination of its surrounding environment due to the volatilization of an organic solvent, without the rising of dirt or dust to adhere to the sample to be analyzed, and without the possibility of a spark even when a metal is present around the sample to be analyzed.

When the static elimination member for analysis of the present invention includes the carbon nanotube aggregate, the use of the static elimination member for analysis of the present invention can express the following effect: it becomes physically easy to analyze a sample in precision analysis such as analysis involving using an atomic force microscope while covering the sample with a chamber.

When the static elimination member for analysis of the present invention includes the carbon nanotube aggregate, the use of the static elimination member for analysis of the present invention can express the following effect: in precision analysis such as analysis involving using an atomic force microscope, a sample can be analyzed under a high-temperature environment or a vacuum environment additionally without problems.

### <First preferred embodiment>

A preferred embodiment (hereinafter sometimes referred to as "first preferred embodiment") of the carbon nanotube aggregate that may be included in the static elimination member for analysis of the present invention includes a plurality of carbon nanotubes, in which: the carbon nanotubes each have a plurality of walls; the distribution width of the wall number distribution of the carbon nanotubes is 10 walls or more; and the relative frequency of the mode of the wall number distribution is 25% or less.

The distribution width of the wall number distribution of the carbon nanotubes is 10 walls or more, preferably from 10 walls to 30 walls, more preferably from 10 walls to 25 walls, still more preferably from 10 walls to 20 walls.

The "distribution width" of the wall number distribution of the carbon nanotubes refers to a difference between the maximum wall number and minimum wall number of the wall numbers of the carbon nanotubes. When the distribution width of the wall number distribution of the carbon nanotubes is adjusted within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The wall numbers and the wall number distribution of the carbon nanotubes may be measured with any appropriate device. The wall numbers and wall number distribution of the carbon nanotubes are preferably measured with a scanning electron microscope (SEM) or a transmission electron microscope (TEM). For example, at least 10, preferably 20 or more carbon nanotubes may be taken out from the carbon nanotube aggregate to evaluate the wall numbers and the wall number distribution by the measurement with the SEM or the TEM.

The maximum wall number of the wall numbers of the carbon nanotubes is preferably from 5 to 30, more preferably from 10 to 30, still more preferably from 15 to 30, particularly preferably from 15 to 25.

The minimum wall number of the wall numbers of the carbon nanotubes is preferably from 1 to 10, more preferably from 1 to 5.

When the maximum wall number and minimum wall number of the wall numbers of the carbon nanotubes are adjusted within the above-mentioned ranges, the carbon nanotubes can bring together additionally excellent mechanical properties and a high specific surface area, and moreover, the carbon nanotubes can provide a carbon nanotube aggregate exhibiting additionally excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The relative frequency of the mode of the wall number distribution is 25% or less, preferably from 1% to 25%, more preferably from 5% to 25%, still more preferably from 10% to 25%, particularly preferably from 15% to 25%. When the relative frequency of the mode of the wall number distribution is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The mode of the wall number distribution is present at preferably from 2 to 10 walls in number, more preferably from 3 to 10 walls in number. When the mode of the wall number distribution is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

Regarding the shape of each of the carbon nanotubes, the lateral section of the carbon nanotube has only to have any appropriate shape. The lateral section is of, for example, a substantially circular shape, an oval shape, or an n-gonal shape (n represents an integer of 3 or more).

The carbon nanotubes each have a length of preferably 1 µm or more, more preferably from 5 µm to 5, 000 µm, still more preferably from 10 µm to 2,000 µm, even more preferably from 15 µm to 1,500 µm, particularly preferably from 20 µm to 1, 000 µm, most preferably from 25 µm to 800 µm. When the length of each of the carbon nanotubes is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The specific surface area and density of each of the carbon nanotubes may be set to any appropriate values.

### <Second preferred embodiment>

Another preferred embodiment (hereinafter sometimes referred to as "second preferred embodiment") of the carbon nanotube aggregate that may be included in the static elimination member for analysis of the present invention includes a plurality of carbon nanotubes, in which: the carbon nanotubes each have a plurality of walls; the mode of the wall number distribution of the carbon nanotubes is present at 10 or less walls in number; and the relative frequency of the mode is 30% or more.

The distribution width of the wall number distribution of the carbon nanotubes is preferably 9 walls or less, more preferably from 1 wall to 9 walls, still more preferably from 2 walls to 8 walls, particularly preferably from 3 walls to 8 walls.

The "distribution width" of the wall number distribution of the carbon nanotubes refers to a difference between the maximum wall number and minimum wall number of the wall numbers of the carbon nanotubes. When the distribution width of the wall number distribution of the carbon nanotubes is adjusted within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The wall numbers and wall number distribution of the carbon nanotubes may be measured with any appropriate device. The wall numbers and wall number distribution of the carbon nanotubes are preferably measured with a scanning electron microscope (SEM) or a transmission electron microscope (TEM). For example, at least 10, preferably 20 or more carbon nanotubes may be taken out from the carbon nanotube aggregate to evaluate the wall numbers and the wall number distribution by the measurement with the SEM or the TEM.

The maximum wall number of the wall numbers of the carbon nanotubes is preferably from 1 to 20, more preferably from 2 to 15, still more preferably from 3 to 10.

The minimum wall number of the wall numbers of the carbon nanotubes is preferably from 1 to 10, more preferably from 1 to 5.

When the maximum wall number and minimum wall number of the wall numbers of the carbon nanotubes are adjusted within the above-mentioned ranges, the carbon nanotubes can bring together additionally excellent mechanical properties and a high specific surface area, and moreover, the carbon nanotubes can provide a carbon nanotube aggregate exhibiting additionally excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The relative frequency of the mode of the wall number distribution is 30% or more, preferably from 30% to 100%, more preferably from 30% to 90%, still more preferably from 30% to 80%, particularly preferably from 30% to 70%. When the relative frequency of the mode of the wall number distribution is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The mode of the wall number distribution is present at 10 or less walls in number, preferably from 1 to 10 walls in number, more preferably from 2 to 8 walls in number, still more preferably from 2 to 6 walls in number. In the present invention, when the mode of the wall number distribution is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

Regarding the shape of each of the carbon nanotubes, the lateral section of the carbon nanotube has only to have any appropriate shape. The lateral section is of, for example, a substantially circular shape, an oval shape, or an n-gonal shape (n represents an integer of 3 or more).

The carbon nanotubes each have a length of preferably 1 µm or more, more preferably from 5 µm to 5, 000 µm, still more preferably from 10 µm to 2,000 µm, even more preferably from 15 µm to 1,500 µm, particularly preferably from 20 µm to 1, 000 µm, most preferably from 25 µm to 800 µm. When the length of each of the carbon nanotubes is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes is adjusted within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

The specific surface area and density of each of the carbon nanotubes may be set to any appropriate values.

### «Method of producing carbon nanotube aggregate»

Any appropriate method may be adopted as a method of producing the carbon nanotube aggregate that may be included in the static elimination member for analysis of the present invention.

The method of producing the carbon nanotube aggregate that may be included in the static elimination member for analysis of the present invention is, for example, a method of producing a carbon nanotube aggregate aligned substantially perpendicularly from a smooth substrate by chemical vapor deposition (CVD) involving forming a catalyst layer on the substrate and filling a carbon source in a state in which a catalyst is activated with heat, plasma, or the like to grow the carbon nanotubes. In this case, for example, the removal of the substrate provides a carbon nanotube aggregate aligned in a length direction.

Any appropriate substrate may be adopted as the substrate. The substrate is, for example, a material having smoothness and high-temperature heat resistance enough to resist the production of the carbon nanotubes. Examples of such material include quartz glass, silicon (such as a silicon wafer), and a metal plate made of, for example, aluminum. The substrate may be directly used as the base material that may be included in the carbon nanotube aggregate that may be included in the static elimination member for analysis of the present invention.

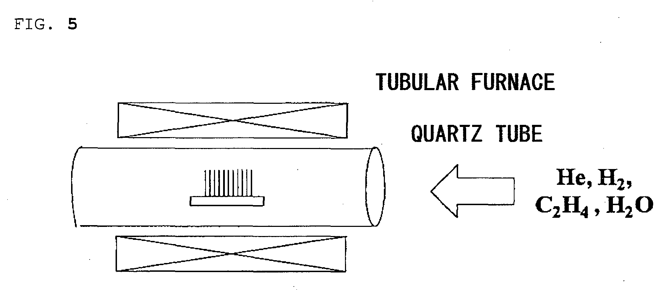

Any appropriate apparatus may be adopted as an apparatus for producing the carbon nanotube aggregate that may be included in the static elimination member for analysis of the present invention. The apparatus is, for example, a thermal CVD apparatus of a hot wall type formed by surrounding a cylindrical reaction vessel with a resistance heating electric tubular furnace as illustrated in FIG. 5. In this case, for example, a heat-resistant quartz tube is preferably used as the reaction vessel.

Any appropriate catalyst may be used as the catalyst (material for the catalyst layer) that may be used in the production of the carbon nanotube aggregate that may be included in the static elimination member for analysis of the present invention. Examples of the catalyst include metal catalysts such as iron, cobalt, nickel, gold, platinum, silver, and copper.

In the production of the carbon nanotube aggregate that may be included in the static elimination member for analysis of the present invention, an alumina/hydrophilic film may be formed between the substrate and the catalyst layer as required.

Any appropriate method may be adopted as a method of producing the alumina/hydrophilic film. For example, the film may be obtained by producing an SiO₂ film on the substrate, depositing Al from the vapor, and increasing the temperature of Al to 450°C after the deposition to oxidize Al. According to such production method, Al₂O₃ interacts with the hydrophilic SiO₂ film, and hence an Al₂O₃ surface different from that obtained by directly depositing Al₂O₃ from the vapor in particle diameter is formed. When Al is deposited from the vapor, and then its temperature is increased to 450 °C so that Al may be oxidized without the production of any hydrophilic film on the substrate, it may be difficult to form the Al₂O₃ surface having a different particle diameter. In addition, when the hydrophilic film is produced on the substrate and Al₂O₃ is directly deposited from the vapor, it may also be difficult to form the Al₂O₃ surface having a different particle diameter.

The catalyst layer that may be used in the production of the carbon nanotube aggregate that may be included in the static elimination member for analysis of the present invention has a thickness of preferably from 0.01 nm to 20 nm, more preferably from 0.1 nm to 10 nm in order that fine particles may be formed. When the thickness of the catalyst layer that may be used in the production of the carbon nanotube aggregate that may be included in the static elimination member for analysis of the present invention falls within the range, the carbon nanotube aggregate can bring together excellent mechanical properties and a high specific surface area, and moreover, the carbon nanotube aggregate can exhibit excellent pressure-sensitive adhesive property. Therefore, the static elimination member for analysis using such carbon nanotube aggregate can be additionally sufficiently attached to the periphery of a sample to be analyzed in precision analysis such as analysis involving using an atomic force microscope, and can additionally suppress the charging of the periphery of the sample to be analyzed without contaminating the sample to be analyzed or its surrounding environment. In addition, the use of the static elimination member for analysis of the present invention: eliminates the possibility of a spark even when a metal is present around the sample to be analyzed; makes it physically easy to analyze the sample while covering the sample with a chamber; and enables the analysis thereof under a high-temperature environment or a vacuum environment additionally without problems.

Any appropriate method may be adopted as a method of forming the catalyst layer. Examples of the method include a method involving depositing a metal catalyst from the vapor, for example, with an electron beam (EB) or by sputtering and a method involving applying a suspension of metal catalyst fine particles onto the substrate.

Any appropriate carbon source may be used as the carbon source that may be used in the production of the carbon nanotube aggregate that may be included in the static elimination member for analysis of the present invention. Examples thereof include: hydrocarbons such as methane, ethylene, acetylene, and benzene; and alcohols such as methanol and ethanol.

Any appropriate temperature may be adopted as a production temperature in the production of the carbon nanotube aggregate that may be included in the static elimination member for analysis of the present invention. For example, the temperature is preferably from 400°C to 1,000°C, more preferably from 500°C to 900°C, still more preferably from 600°C to 800°C in order that catalyst particles allowing sufficient expression of the effects of the present invention may be formed.

### Examples

Hereinafter, the present invention is described by way of Examples. However, the present invention is not limited thereto. It should be noted that various evaluations and measurements were performed by the following methods.

### <Measurement of length L of fibrous columnar object>

The length L of a fibrous columnar object was measured with a scanning electron microscope (SEM).

### <Measurement of shearing adhesive strength of static elimination member for analysis>

A static elimination member for analysis cut into a unit area of 1 cm² was mounted on a glass (MATSUNAMI SLIDE GLASS measuring 27 mm by 56 mm) so that its attachment surface was brought into contact with the glass, and a 5-kg roller was reciprocated once to crimp the attachment surface of the static elimination member for analysis onto the glass. After that, the resultant was left to stand for 30 minutes. A shearing test was performed with a tensile tester (Instron Tensile Tester) at a tension speed of 50 mm/min and room temperature (25°C), and the resultant peak was defined as a shearing adhesive strength.

### <Evaluation of wall numbers and wall number distribution of carbon nanotubes in carbon nanotube aggregate>

The wall numbers and wall number distribution of carbon nanotubes in a carbon nanotube aggregate were measured with a scanning electron microscope (SEM) and/or a transmission electron microscope (TEM). At least 10, preferably 20 or more carbon nanotubes in the obtained carbon nanotube aggregate were observed with the SEM and/or the TEM to check the wall number of each carbon nanotube, and the wall number distribution was created.

### <Evaluation for static elimination property>

The static elimination property of the periphery of a measuring site of a sample to be analyzed in analysis with an atomic force microscope (AFM) was evaluated under each of : an analysis environment having a temperature of 25°C and normal pressure; an analysis environment having a temperature of 200°C and normal pressure; and an analysis environment having a temperature of 200°C and a vacuum.

That is, the measuring site of the sample to be analyzed was subjected to measurement twice, and the peak values of its surface shape in the first measurement (trace) and second measurement (retrace) were compared with each other.

Evaluation criteria are as described below.
o: The peak values of the surface shape measured in the first measurement (trace) and second measurement (retrace) differ from each other by less than ±60%.
× (a): The peak values of the surface shape measured in the first measurement (trace) and second measurement (retrace) differ from each other by ±60% or more.
x(b): It is difficult to perform the measurement owing to the structure of the apparatus.
× (c): Static elimination cannot be realized owing to the evaporation of moisture.

### <Evaluation for contamination property>

The contamination property of a measuring site of a sample to be analyzed in analysis with an atomic force microscope (AFM) was evaluated under each of: an analysis environment having a temperature of 25°C and normal pressure; an analysis environment having a temperature of 200°C and normal pressure; and an analysis environment having a temperature of 200°C and a vacuum.

That is, the presence or absence of physical foreign matter was examined by observing the measuring site of the sample to be analyzed with a field-emission electron microscope (FE-SEM). In addition, the presence or absence of chemical contamination was examined by detecting carbon derived from organic matter at the measuring site of the sample to be analyzed with an X-ray photoelectron spectrophotometer (ESCA).

Evaluation criteria are as described below.
○: No contamination is detected by each of the analysis with the FE-SEM and the analysis with the ESCA.
x(d): Contamination is detected by the analysis with the FE-SEM.
× (e): Contamination is detected by the analysis with the ESCA.

### [Example 1]

An alumina thin film (thickness: 20 nm) was formed on a silicon wafer (manufactured by Silicon Technology Co. , Ltd.) as a substrate cut into a piece measuring 10 mm by 10 mm in advance with a sputtering apparatus (RFS-200 manufactured by ULVAC, Inc.). An Fe thin film (thickness: 1.0 nm) was further deposited from the vapor onto the alumina thin film with a sputtering apparatus (RFS-200 manufactured by ULVAC, Inc.).

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C, and was stabilized at 765°C. While the temperature was held at 765°C, the inside of the tube was filled with a helium/hydrogen/ethylene (85/50/5 sccm, moisture content: 600 ppm) mixed gas, and the resultant was left to stand for 5 minutes to grow carbon nanotubes on the substrate. Thus, a carbon nanotube aggregate (1) in which the carbon nanotubes were aligned in their length directions was obtained.

The length of each of the carbon nanotubes of the carbon nanotube aggregate (1) was 100 µm, and the diameter thereof was 4.8 nm.

In the wall number distribution of the carbon nanotubes of the carbon nanotube aggregate (1), a mode was present at 2 walls, and its relative frequency was 75%.

The carbon nanotube aggregate (1) was peeled from the substrate with a pair of tweezers to provide a sheet-shaped static elimination member (1) for analysis measuring 10 mm long by 10 mm wide.

The resultant static elimination member (1) for analysis was subjected to various evaluations.

Table 1 summarizes the results.

### [Example 2]

An alumina thin film (thickness: 20 nm) was formed on a silicon wafer (manufactured by Silicon Technology Co. , Ltd.) as a substrate cut into a piece measuring 10 mm by 10 mm in advance with a sputtering apparatus (RFS-200 manufactured by ULVAC, Inc.). An Fe thin film (thickness: 2.0 nm) was further deposited from the vapor onto the alumina thin film with a sputtering apparatus (RFS-200 manufactured by ULVAC, Inc.).

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 10 minutes to grow carbon nanotubes on the substrate. Thus, a carbon nanotube aggregate (2) in which the carbon nanotubes were aligned in their length directions was obtained.

The length of each of the carbon nanotubes of the carbon nanotube aggregate (2) was 300 µm, and the diameter thereof was 10.1 nm.

In the wall number distribution of the carbon nanotubes of the carbon nanotube aggregate (2), a mode was present at 3 walls, and its relative frequency was 72%.

The carbon nanotube aggregate (2) was peeled from the substrate with a pair of tweezers to provide a sheet-shaped static elimination member (2) for analysis measuring 10 mm long by 20 mm wide.

The resultant static elimination member (2) for analysis was subjected to various evaluations.

Table 1 summarizes the results.

### [Example 3]

An alumina thin film (thickness: 20 nm) was formed on a silicon wafer (manufactured by Silicon Technology Co. , Ltd.) as a substrate with a sputtering apparatus (RFS-200 manufactured by ULVAC, Inc.). An Fe thin film (thickness: 1.0 nm) was further deposited from the vapor onto the alumina thin film with the sputtering apparatus (RFS-200 manufactured by ULVAC, Inc.). After that, a pattern having a diameter of 30 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 2 minutes to grow carbon nanotubes on the substrate. Thus, a carbon nanotube aggregate (3) in which the carbon nanotubes were aligned in their length directions was obtained.

The length of each of the carbon nanotubes of the carbon nanotube aggregate (3) was 30 µm, and the diameter thereof was 4.8 nm.

In the wall number distribution of the carbon nanotubes of the carbon nanotube aggregate (3), a mode was present at 2 walls, and its relative frequency was 75%.

The carbon nanotube aggregate (3) was peeled from the substrate with a pair of tweezers to provide a probe-shaped static elimination member (3) for analysis having a diameter of 30 µm.

The resultant static elimination member (3) for analysis was subjected to various evaluations.

Table 1 summarizes the results.

### [Example 4]

An Al thin film (thickness: 10 nm) was formed on a silicon substrate (manufactured by KST, wafer with a thermal oxide film, thickness: 1,000 µm) cut into a piece measuring 10 mm by 10 mm in advance with a vacuum deposition apparatus (JEE-4X Vacuum Evaporator manufactured by JEOL Ltd.), and was then subjected to oxidation treatment at 450°C for 1 hour. Thus, an Al₂O₃ film was formed on the silicon substrate. An Fe thin film (thickness: 2.0 nm) was further deposited from the vapor onto the Al₂O₃ film with a sputtering apparatus (RFS-200 manufactured by ULVAC, Inc.) to form a catalyst layer.

Next, the resultant silicon substrate with the catalyst layer was cut and mounted in a quartz tube having a diameter of 30 mm, and a helium/hydrogen (120/80 sccm) mixed gas whose moisture content had been held at 350 ppm was flowed into the quartz tube for 30 minutes to replace the inside of the tube. After that, a temperature in the tube was increased with an electric tubular furnace to 765°C in 35 minutes in a stepwise manner, and was stabilized at 765°C. While the temperature was held at 765°C, the inside of the tube was filled with a helium/hydrogen/ethylene (105/80/15 sccm, moisture content: 350 ppm) mixed gas, and the resultant was left to stand for 15 minutes to grow carbon nanotubes on the substrate. Thus, a carbon nanotube aggregate (4) in which the carbon nanotubes were aligned in their length directions was obtained.

The length of each of the carbon nanotubes of the carbon nanotube aggregate (4) was 400 µm, and the diameter thereof was 14.6 nm.

In the wall number distribution of the carbon nanotubes of the carbon nanotube aggregate (4), the distribution width of the wall number distribution was 17 walls (4 walls to 20 walls), modes were present at 4 walls and 8 walls, and their relative frequencies were 20% and 20%, respectively.

The carbon nanotube aggregate (4) was peeled from the substrate with a pair of tweezers to provide a sheet-shaped static elimination member (4) for analysis measuring 10 mm long by 10 mm wide.

The resultant static elimination member (4) for analysis was subjected to various evaluations.

Table 1 summarizes the results.

### [Comparative Example 1]

Various evaluations were performed without using any static elimination member for analysis.

Table 1 summarizes the results.

### [Comparative Example 2]

Various evaluations were performed by using 0.1 mg of carbon nanotube powder (manufactured by Nanocyl, trade name: short-DWNT) as a static elimination member for analysis.

Table 1 summarizes the results.

### [Comparative Example 3]

Various evaluations were performed without using any static elimination member for analysis and by using a static blower (manufactured by KEYENCE CORPORATION, trade name: SJ-5020). Specifically, the surface of a sample was irradiated with UV light by using the static blower for several seconds. After that, the sample was set in a chamber and subjected to measurement.

Table 1 summarizes the results.

### [Comparative Example 4]

Various evaluations were performed under a high-humidity condition (humidity: 65%) without using any static elimination member for analysis. Specifically, a petri dish containing a sample and pure water was left at rest in a chamber kept at a temperature of 25°C and a humidity of 50%RH. After that, the sample was left to stand for about 1 hour and then subjected to measurement.

Table 1 summarizes the results.

**[Table 1]**

| | static elimination means | CNT length (µm) | CNT diameter (nm) | Shape | Size | AFM (25°C) | | AFM (200°C) | | AFM (vacuum, 200°C) | | Shearing adhesive strength (N/cm²) |
|---|---|---|---|---|---|---|---|---|---|---|---|---|
| | | | | | | Static elimination property | Contamination property | Static elimination property | Contamination property | Static elimination property | Contamination property | |
| Example 1 | Static elimination member (1) for analysis DW-75 | 100 | 4.8 | Sheet | 10 mm × 10 mm | ○ | ○ | ○ | ○ | ○ | ○ | 6.7 |
| Example 2 | Static elimination member (2) for analysis TW-75 | 300 | 10.1 | Sheet | 10 mm × 20 mm | ○ | ○ | ○ | ○ | ○ | ○ | 18.9 |
| Example 3 | Static elimination member (3) for analysis DW-75 | 30 | 4.8 | Probe | ϕ 30 µm | ○ | ○ | ○ | ○ | ○ | ○ | 17.4 |
| Example 4 | Static elimination member (4) for analysis Broad | 400 | 14.6 | Sheet | 10 mm × 10 mm | ○ | ○ | ○ | ○ | ○ | ○ | 30.1 |
| Comparative Example 1 | None | - | - | - | - | × (a) | ○ | × (a) | ○ | × (a) | ○ | - |
| Comparative Example 2 | CNT powder | - | - | Powder | 0.1 mg | × (a) | × (d) | × (a) | × (d) | × (a) | × (d) | - |
| Comparative Example 3 | Static blower | - | - | - | - | ○ | × (e) | × (b) | - | × (b) | - | - |
| Comparative Example 4 | High humidity | - | - | - | - | ○ | × (e) | × (c) | - | × (c) | - | - |

The surfaces of the samples subjected to various static elimination approaches were observed with a FE-SEM having a resolution of 1 nm or less. As a result, in the case of the carbon nanotube powder, the scattering of a contaminant to a site to be analyzed was observed. On the other hand, it was confirmed that in the case of each carbon nanotube aggregate (fibrous columnar structure) having no flowability and causing no powder scattering, the contamination of the sample was absent.

The surface of the sample subjected to the various evaluations under the high-humidity condition was analyzed with an ESCA. As a result, an organic component to which moisture could easily adsorb was observed. On the other hand, it was confirmed that each carbon nanotube aggregate (fibrous columnar structure) free of any contaminant caused no contamination.

Neutralization with a static elimination blower as well as grounding with a conductive substance is available as an approach to performing static elimination. However, the static elimination blower cannot be utilized under a high-temperature and high-humidity condition or a vacuum condition because a sample needs to be covered with a chamber for environmental control. In contrast, even under an environmentally controlled condition, the use of each carbon nanotube aggregate (fibrous columnar structure) causing no contamination was confirmed to exhibit a static elimination effect in the chamber as well.

### Industrial Applicability

The static elimination member for analysis of the present invention can be suitably used in precision analysis such as analysis involving using an atomic force microscope.

### Reference Signs List

- **1000**: static elimination member for analysis
- **100**: fibrous columnar structure
- **1**: base material
- **2**: fibrous columnar object
- **2a**: one end of fibrous columnar object

## Claims

1. A static elimination member for analysis, comprising a fibrous columnar structure including a plurality of fibrous columnar objects.

2. A static elimination member for analysis according to claim 1, wherein the static elimination member has a shearing adhesive strength for a glass surface at room temperature of 1 N/cm² or more.

3. A static elimination member for analysis according to claim 1, wherein the fibrous columnar structure comprises a carbon nanotube aggregate including a plurality of carbon nanotubes.

4. A static elimination member for analysis according to claim 1, wherein the static elimination member has a sheet shape.

5. A static elimination member for analysis according to claim 1, wherein the static elimination member has a probe shape.
